Europäisches Patentamt

(19) European Patent Office

Office européen des brevets

(11) Publication number: **0 273 236 B1**

# EUROPEAN PATENT SPECIFICATION

(45) Date of publication of the patent specification:
31.10.90

(51) Int. Cl.⁵: **C09D 11/02**, C09D 7/14

(21) Application number: 87118006.3

(22) Date of filing: 05.12.87

(54) Process of producing an ink.

(30) Priority: 15.12.86 US 941785

(43) Date of publication of application:
06.07.88 Bulletin 88/27

(45) Publication of the grant of the patent:
31.10.90 Bulletin 90/44

(84) Designated Contracting States:
CH DE ES FR GB IT LI

(56) References cited:
GB-A- 1 156 836
US-A- 4 230 610
US-A- 4 634 471

CHEMICAL ABSTRACTS, vol. 106, no. 6, 9th
February 1987, page 86, abstract no. 34620z, Columbus,
Ohio, US; & JP-A-61 111 365 (TOYO INK MFG. CO.,
LTD) 29-05-1986
CHEMICAL ABSTRACTS, vol. 100, no. 26, 25th
June 1984, page 100, abstract no. 211861c, Columbus,
Ohio, US; & JP-A-59 15 455 (TOYO INK MFG. CO.,
LTD) 26-01-1984

(73) Proprietor: BASF Corporation, 9 Campus Drive,
Parsippany, NJ 07054(US)

(72) Inventor: Foye, Thomas Edward, 139 Dartmouth, Holland
Michigan 49423(US)
Inventor: Sasamoto, Edward Kaora, 145 West 24th
Street, Holland Michigan 49423(US)
Inventor: Sappok, Reinhard Johannes, 2366 Timberlee
Drive, Holland Michigan 49423(US)

(74) Representative: Karau, Wolfgang, Dr. et al, BASF
Aktiengesellschaft Patentabteilung ZSP - C 6,
D-6700 Ludwigshafen(DE)

**Description**

This invention relates to the production of printing ink.

A printing ink is conventionally made by charging the dry or flushed pigment into an ink mixing tank, adding additional components, mixing well and finishing the ink by either running the ink through a shot or bead mill and filtering, or over a roll mill and possibly filtering or simply filtering out of the mixing tank. In any event, it is essential that the pigment be uniformly dispersed in the vehicle.

The pigments used are usually formed at a low concentration (2-5 percent) in an aqueous suspension. These are then concentrated in a plate and frame filter press or by flocculation, flotation, or settling. The pigment in this concentrated form is generally referred to as presscake. There are many techniques for improving dispersibility of pigments such as adding the pigment in the form of a fine powder generally produced by drying in an oven or on a heated belt or in a spray dryer followed by grinding, preferably in a powder mill, and blending. Such process agglomerates the fine pigment particles formed upon synthesis. Many of the agglomerates cannot be broken down economically. Further, powdered pigments are difficult to redisperse to obtain maximum dispersion.

While pigment presscake disperses more readily in an ink composition than dry pigment powders, nevertheless, due to the low solids content of the aqueous cake generally obtained by conventional processes, dispersion of untreated presscake in inks is not economically feasible because of the low pigment loading. Also, the amount of water carried by the conventional presscake into the oil ink presents problems. This water must be completely removed during ink manufacturing. This removal process, in addition to considerably lengthening the manufacturing process time, is complicated by the effect of the emulsified water which disrupts the flow properties of these inks making handling and further processing difficult.

Accordingly, the pigment is often "flushed" to transfer the pigment particles from the aqueous phase to a non-polar oil or resin phase. This assists in keeping pigment particles non-agglomerated and easier to dilute for ultimate use in inks or coatings. Further, dusting is non-existent using the flushed paste while it is usually extreme with dry pigments. Since the dry pigment has many agglomerates which cannot be broken down economically by subsequent dispersing equipment, inks from these are usually more opaque, less glossy, and more pigment is required to gain a unit amount of coloration (less color strength).

Flushing has been carried out for many decades by mixing pigment presscake with suitable types and quantities of "vehicles" which may be an oil, or a solution of resin or resins and other additives in a solvent. In the prior art, the transfer was effected by merely kneading the presscake and vehicle together until a major portion of the water has separated. Periodically the flushers have to be tilted to remove water as it breaks, i.e., becomes freed of pigment which has transferred to the oil base. However, flushing has the disadvantage of being time consuming and expensive. Accordingly, it is a purpose of the instant invention to produce a printing ink directly from a presscake and thus avoid the disadvantage of either dried or flushed pigments.

U.S. Patent 4,230,610 discloses the use of polyacrylates as dispersants for aqueous magnesium oxide pigment slurries prior to dewatering. The polyacrylate is obtained by neutralizing poly(acrylic acid) to a pH of from 8 to 12 with bases such as sodium or ammonium hydroxide. This changes the solubilization process properties of the polyacrylic acid resin from oleophilic to hydrophilic.

The invention relates to a process of producing an ink by

A. providing an emulsion which comprises:
1. an organic liquid selected from the group consisting of:
a) oleophilic resins,
b) organic solvents, and
c) mixtures thereof,
2. an emulsification agent and
3. water
B. forming an aqueous suspension of a pigment
C. admixing the emulsion with said pigment suspension,
D. concentrating the emulsion and pigment suspension mixture, and
E. preparing an ink directly from the concentrated emulsion pigment mixture.

In accordance with the instant invention, organic pigments are phase transferred from an aqueous to a non-aqueous phase, in discrete form, while still in the unconcentrated slurry through preferential wetting by surface contact between the pigment and a hydrophobic polymer solution emulsified in water. This material can then be concentrated in a plate and frame press or by flocculation, flotation or settling. After filtration, the resultant material can resemble conventional presscake but contains only 10 to 45 percent water whereas conventional presscake contains 55 to 90 percent water. This treatment is disclosed in U.S. Patent application S.N. 728,236, wherein the material is then flushed. The process as disclosed in the S.N. 728,236 application offers the advantages of increased filter press capacity through increased bulk density and decreased flusher cycle time by significantly reducing the break phase portion of the flushing cycle.

In accordance with the instant invention, the pigment product can be directly added to an ink mixing tank where other vehicles and oils are added to form an ink without drying and grinding or flushing. Surprisingly, the advantages of making an ink from a flushed product are maintained.

In accordance with the instant invention, an oil in water emulsion is prepared by mixing an organic liquid selected from the group consisting of oleophilic resins, organic solvents and mixtures thereof, an emulsification agent, and water.

The emulsion comprises by weight 50 to 90 percent water, 0 to 40 percent resin, 0 to 40 percent solvent and 0.05 to 0.5 percent emulsification agent, wherein the emulsion must contain at least 2.0 percent by weight of either the resin or the solvent or mixture of both. A preferred emulsion contains 50 to 80 percent by weight water, 10 to 30 percent by weight resin, 10 to 30 percent by weight solvent, and 0.1 to 0.4 percent emulsification agent.

The resins employed are water-insoluble products of the type generally employed in the oil ink industry. More specifically, the resins may be oleophilic resins: drying and semi-drying oils, litho varnishes (bodied linseed oil), rosins, dimerized rosins and esters of dimerized rosins; maleic, fumeric and phenolic modified rosins and rosin esters; aliphatic and aromatic hydrocarbon resins; polyindenes, cumarone/indene resins, alkyl aromatic resins, alkyd resins, urethane or polyamide modified alkyds; polyolefins, phthalate esters, castor, fish and linseed oils, heatset and quickset vehicles used in the printing ink industry; oil soluble fatty acids such as oleic, linoleic, etc.

The solvents employed may be the common solvents generally employed in the water-insoluble oil ink industry such as mineral oil and aliphatic petroleum distillates.

The emulsification agent may be any agent capable of emulsifying the above resins and solvents in water. They can be anionic, cationic, nonionic or amphoteric surface active agents. More specifically, they may be any oil ink industry compatible emulsifier which produces stable oil-in-water emulsions when the oil phase is a resin or resins, solvent or solvents or a combination of the two as defined above. These surface active agents would include amine alkyl sulfonates, bis-tridecyl esters of sodium sulfosuccinic acid, block copolymers of ethylene oxide and propylene oxide as well as many others. Among the surface active agents which may be employed are the sodium salts of high molecular weight fatty alcohol sulfates, such as sodiumlauryl sulfate, sodium lignin sulfonates, the dioctyl ester of sodium sulfosuccinic acid, polyalkylene oxide condensation products, such as polyethylene oxides, quaternary ammonium salts, the sodium sulfonates of oleic acid esters of aliphatic compounds, sodium salts of aryl alkyl polyether sulfonates, and the like. Examples of suitable surfactants which are to be regarded as illustrative, and not as limiting, are given in Table I:

## TABLE I

| No. | Chemical Class | Type | Trade Name | Percent Active |
|-----|----------------|------|------------|----------------|
| 1 | Sodium lauryl sulphate | Anionic | Duponol ME | 96 |
| 2 | Sodium dioctyl-sulfosuccinate | Anionic | Aerosol OT | 100 |
| 3 | Sodium salt of alkyl aryl polyether sulfate | Anionic | Triton 770 | 25 |
| 4 | Polyalkylene glycol ether | Nonionic | Tergitol XD | 100 |
| 5 | Polyoxyethylated castor oil | Nonionic | Emulphor EL 749 | 97 |
| 6 | Sodium alkylnaphthalene sulfonate | Anionic | Nekal BA 75 | 70 |

The emulsion is prepared by mixing in any conventional high shear mixing equipment such as a Cowles dissolver or a single blade mixer, a Banberry mill or a Gaullin homogenizer. The mixing may take place for a few minutes to several hours depending on the ultimate product desired.

An aqueous pigment suspension is then prepared by any known method.

This invention may be employed in conjunction with the production of many different pigments. Since the scientific nomenclature for dyes and pigments is very difficult, trade names are used almost exclusively in speaking of them. Examples of pigments for which this invention is applicable, identified by their recognized names followed by the Color Index or C.I. number in parenthesis, are the following:

Pigment Red 1 (12070), Pigment Red 3 (12120), Pigment Red 4 (12085), Pigment Red 48:1 (15865:1), Pigment Red 48:2 (15865:2), Pigment Red 48:3 (15865:3), Pigment Red 48:4 (15865:4), Pigment Red 49:1 (15630:1), Pigment Red 49:2 (15630:2), Pigment Red 53:1 (15585:1), Pigment Red 52 (15860:1), Pigment Red 57 (15850:1), Pigment Red 81 (45160:1), Pigment Red 190 (71145), Pigment Orange 13 (21110), Pigment Orange 19 (15990), Pigment Orange 46 (15602), Pigment Yellow 12 (21090), Pigment Yellow 13 (21100), Pigment Orange 16 (21160), Pigment Yellow 14 (21095), Pigment Yellow 17 (21105), Pigment Yellow 83 (21108), Pigment Green 7 (74260), Pigment Green 36 (74160), Pigment Blue 15:1, 15:2, 15:3 (74160), Pigment Blue 61 (42765:1).

An explanation of the well-known and well-used Color Index can be found on pages 20, 32, and 33 of American Inkmaker for January, 1984.

The emulsion and pigment suspension are then mixed using conventional mixing equipment such as described above with respect to the preparation of the emulsion. In general, the emulsion is added to the pigment strike liquor. The temperature of both the emulsion and pigment strike liquor will depend on the pigment employed. It should be the usual temperature at which the pigment slurry is concentrated and can range from 20°C to 80°C. The emulsion should have a micelle size of 0.1 to 5.0 microns but can range from 0.1 to 50 microns or larger. The mixing time after emulsion addition should be from about 15 minutes to two hours and the emulsion should be added during the first portion of this time period. After mixing the pigment suspension with the emulsion, the composition will generally be as follows:

|   |   | Broad (%) | Preferred (%) |
|---|---|---|---|
| A. | Water | 70 - 98.5 | 90 - 97.9 |
| B. | Resin | 0 - 20 [1] | 0.6 - 5 |
| C. | Solvent | 0 - 20 [1] | 0.6 - 5 |
| D. | Emulsification Agent | 0.0015 - 0.3 | 0.009 - 0.05 |
| E. | Pigment | 0.5 - 10 | 1.0 - 5.0 |

The mixture is then concentrated, preferably by forcing through a filter such as a plate and frame filter press. This pigment product can be directly added to an ink mixing tank where other vehicles and oils would be added to form an ink.

Any of the hydrophobic organic vehicles that are commonly used in printing ink and coating compositions may be employed in the method and composition of this invention. Such vehicles are represented by drying, semi-drying, and non-drying oils, litho varnishes, mineral oils, rosins, dimerized rosins, esters or dimerized rosins, aliphatic and aromatic hydrocarbon resins, alkyl-aromatic resins, maleic and fumeric-modified rosin, phenolic resin, phenolic-modified rosin esters, alkyd resins, urethane-modified alkyds, polyolefins, polyindenes, coumarone/indene resins, phthalate esters, castor oil, fish oil, linseed oil, gloss varnishes, and various heat-set, quick-set and steam-set vehicle systems.

The vehicle may be a solution of a resin or mixture of resins and other additives in a solvent.

Typical resins which can be advantageously employed in such solutions are illustrated in the following table:

TABLE II

| No. | Resin Type | Trade Name of Resin | Manufacturer |
|-----|-----------|---------------------|--------------|
| 1. | Isophthalic Alkyd based on Linseed Oil | AVO-791 | BASF |
| 2. | Polyamide Alkyd | Nylin 5 | Lawter |
| 3. | Phenolic Modified Rosin Ester of Abietic Acid | Beckacite 24-102 | Reichhold |
| 4. | Maleic Modified Rosin Ester of Abietic Acid | Filtrez 3790 | FRP |
| 5. | Pentaerythritol Ester of Dimeric Resin Acids | Pentalyn K | Hercules |
| 6. | Aliphatic Hydrocarbon | Piccovan AB165 | Hercules |
| 7. | Aromatic Hydrocarbon | LX-685-135 200 | Neville |
| 8. | Modified Hydrocarbon | Nevroz 1420 | Neville |
| 9. | Aromatic-Aliphatic Hydrocarbon | Petrovez 200 | Lawter |

As solvent in the resin-solvent type vehicle there may be employed aliphatic hydrocarbons, including petroleum distillates having a boiling range of 200°C to 375°C, petroleum solvents such as mineral spirits and VMP naptha, petroleum aromatic solvents, such as Solvesso No. 100, aromatic solvent having a boiling range 150° to 185°F and a KB value of 91, aromatic solvents having a KB value of 92 to 100 such as xylene, and acyclic alcohols, ketones, and ethers, such as butanol, methyl isobutyl ketone, and ethylene glycol monomethyl ether ("Methylcellosolve"). The solvent mixtures will vary with the resins used and may be adjusted accordingly, but must be capable of dissolving the resin completely.

Standard ink processing techniques of shot or bead milling and filtering or roll milling and filtering may then be used to produce an ink of commercial quality. The water carried by the pigment product is removed in the tank by ambient or vacuum evaporation or on the roll mill. No phase separation takes place which normally occurs if regular presscake is used similarly and would present a major problem.

The treated presscake product has advantages over both dry pigment and flushed color. Compared to dry pigment it has the same advantages of a flushed color, i.e., non-dusting, more transparency, higher gloss and higher color strength. Versus flush pigment, its advantages lie in the manufacturing process. This material can go directly from presscake to ink tank, eliminating the time and energy consuming flushing process, without losing any transparency, gloss or color strength.

As specific embodiments and illustrative of the present invention, certain specific examples are set forth below. In the instant application all parts and percentages are by weight and all temperatures are in degrees Centigrade unless otherwise specified.

Example 1

A dodecylbenzenesulfonic acid emulsifying agent in amount of 0.3 part was mixed in a stainless steel tank for five minutes with 90.0 parts of water using a high-speed Cowles sawtooth blade mixer. Thirty parts of vehicle A, a heatset vehicle, was then added. This comprised 14.1 parts of a hydrocarbon solvent sold under the trademark Magiesol 47, 6 parts of a #0 bodied alkyd resin, and 9.9 parts of an aromatic-aliphatic hydrocarbon resin sold under the trademark Petrorez 140.

The emulsion was mixed for 30 minutes at 165°F using the high-speed Cowles sawtooth blade mixer. The average diameter of the micelles obtained was about 3 to 5 microns. This emulsion was then added to a 3 percent aqueous suspension containing 30.0 parts of a Lithol Rubine pigment (C.I. Pigment Red 57 C.I. No. 15850) over a 30 minute period while stirring. After stirring for one hour, the mixture was pumped to a diaphragm filter press where it was concentrated. The resultant unwashed presscake contained 22.0 percent water, 39.0 percent pigment and 39.0 percent vehicle A.

This pigment product was added directly to an ink mixing container using the following laboratory procedure:

1. Measure 75 grams of vehicle B, a Heatset flushing vehicle containing 60.0 percent of an aromatic-aliphatic hydrocarbon resin, sold under the trademark of Petrorez 140, and 40.0 percent of a hydrocarbon solvent sold under the trademark Magiesol-47 into a 250 ml double walled container.

2. Vehicle B was heated to 195°F and maintained at this temperature throughout the process.

3. At 8000 rpm, using a 20 mm cowles sawtooth blade mixer, the pigment product was slowly added in 5 to 10 gram quantities over a period of four hours whereby the total pigment added was 25 grams. The moisture from the pigment product was eliminated by evaporation.

4. After all the pigment product had been added, it was stirred for one hour.

5. The dispersion quality was checked on a 2 ml/NIPIRI grind gauge versus standard and found to be very slightly better.

The grind gauge test is described in ASTM D-1316-79 and can be found in the 1986 ASTM Standards in Section 6 Volume 06.01, pages 218-220.

The standard is a semi-finished ink at 20 percent pigment made by reducing a flushed paste sold by BASF Corporation under the designation 45-PP-0229 with conventional ink letdown vehicles by hand mixing on a glass plate.

6. The ink base was then let down with 117.5 grams of a heat set ink base vehicle and 7.5 grams of a hydrocarbon solvent sold under the trademark Magiesol-47.

The total composition is shown in Table I below.

## Table I

| | |
|---|---|
| Pigment | 10 percent |
| Vehicle A | 10 percent |
| Vehicle B | 30 percent |
| Heat set ink base vehicle | 47.0 percent |
| Hydrocarbon solvent | 3.0 percent |

The above ink was compared to two heatset inks, one conventionally made from a flushed color, sold by BASF Corporation under the designation 45-PP-0229, of master standard quality at equal pigment amounts and the other conventionally made from a dry pigment sold by the BASF Corporation under the designation D-4566-DD of standard quality at equal pigment amount. The results of comparisons on each of the three inks is shown in Table I below using the product of the instant invention as a standard and comparing the flushed product and the dry pigment to that of this invention in the properties set forth in Table II.

6

## Table II

### Pigment Red 57 Evaluations

| Heatset Ink Type | Printone Intensity | Tintorial Strength at Equal Pigment | Grind | Finish |
|---|---|---|---|---|
| Pigment Product of this Invention | Control | -- | -- | -- |
| Flush Color BASF 45-PP-0229 | Equal | Equal | Very slightly better | Equal |
| Dry Pigment BASF D-4566-DD | Equal | 15% weak | Much worse | Very slightly less |

The evaluations demonstrate that the pigment product of this invention outperforms dry pigment and closely resembles a heatset ink of flush color quality. Thus, this demonstrates that by employing the process of this invention, a printing ink of flush color quality can be produced without the time and expense involved in the flushing procedure.

The printone intensity test was conducted as follows:

The test and standard inks were tack adjusted on a tackometer (a procedure familiar to those skilled in the art of inkmaking), then printed side by side on a Little Joe™ hand operated printing press. The print is then dried by passing it through a Sinvatrol™ print drying oven.

A subjective visual comparison is then made of the color intensity of the two side by side ink films.

The tinctorial strength at equal pigment amount test was conducted as follows:

5 grams of tint bleach made from 40 percent zinc oxide and 60 percent Lawter's Thermex A6EXL is mixed by hand on a glass plate with an amount of the test ink equivalent to 30 milligrams of pigment. The same procedure is followed for the standard ink. The two tints are compared for color intensity (tint strength). If the tint strength is not equal, the test ink tint is then made again varying the level of pigment until the tint strength is equal. The tint strength value is then the percentage difference in pigment amount between the test and standard inks.

The grind test was conducted as described above. The finish test was conducted as follows:

The procedure to make the prints is the same as the printone intensity test. After the side by side prints are made, the amount of incident or reflected light from a point source is observed visually at a 60° angle to the print. The subjective visual difference in the amount of reflected light between the test and standard ink films is measured. The greater the amount of reflected light, the greater the finish.

### Example 2

The procedure of Example 1 was applied to a 3 percent aqueous pigment suspension containing 30.0 parts of pigment C.I. Yellow 12 (C.I. No. 21090) at 100°F to produce a heat set ink directly from said pigment product. Comparisons of this product with one made from a flushed color, sold by the BASF Corporation under the designation 12-PP-0220, of master standard quality and one made from a dry pigment, sold by the BASF Corporation under the designation NBD-1442, of master standard quality are set forth in Table III below.

## TABLE III

### Pigment Yellow 12 Evaluations

| Heatset Ink Type | Printone Intensity | Tintorial Strength at Equal Pigment | Grind | Finish |
|---|---|---|---|---|
| Pigment Product of this Invention | Control | -- | -- | -- |
| Flush Color BASF 12-PP-0220 | Equal | 6% strong | Much worse | Slightly more |
| Dry Pigment BASF NBD-1442 | Equal | 83% weak | Much worse | Much less |

Again the above evaluations demonstrate that the pigment product of this invention compares closely to a flush color quality and is greatly superior to a dry pigment and yet the flushing step has been eliminated.

## Claims

1. A process of producing an ink consisting essentially of:
A. providing an emulsion which comprises:
1. an organic liquid selected from the group consisting of:
a) oleophilic resins
b) organic solvents and
c) mixtures thereof,
2. an emulsification agent and
3. water
B. forming an aqueous suspension of a pigment,
C. admixing said emulsion with said aqueous pigment suspension,
D. concentrating said emulsion and pigment suspension mixture and
E. preparing an ink directly from the concentrated emulsion pigment mixture.

2. The process of claim 1 wherein said organic liquid (1) is an oleophilic resin (a).

3. The process of claim 1 wherein said organic liquid (1) is an organic solvent (b).

4. The process of claim 1 wherein said organic liquid (1) is a mixture of (a) and (b).

5. The process of claim 1, 2, 3 or 4 wherein said concentration step is performed in a filter press.

6. The process of claim 5 wherein said emulsion and aqueous pigment suspension are mixed at 20° to 80°C and said emulsion comprises 50 to 90 percent water, 0 to 40 percent of said resin (a) 0 to 40 percent of said solvent (b) and 0.05 to 0.5 percent of said emulsification agent, said emulsion containing a minimum of 2.0 percent of said resin (a) or said solvent (b) or mixture of both.

7. The process of claim 6 wherein said organic liquid (1) is an oleophilic resin (a) in an amount of 10 to 30 percent by weight.

8. The process of claim 6 wherein said organic liquid (1) is an organic solvent (b) in an amount of 10 to 30 percent by weight.

9. The process of claim 6 wherein said emulsion pigment suspension mixture prior to passage through said concentration zone comprises 70 to 98.5 percent water, 0 to 20 percent resin, 0 to 20 percent solvent, 0.0015 to 0.3 percent emulsification agent and 0.5 to 10 percent pigment, the composition containing at least 0.1 percent by weight of said resin or said solvent or mixture of both.

10. The process of claim 9 wherein said organic liquid (1) is an oleophilic resin (a).

11. The process of claim 9 wherein said organic liquid (1) is an organic solvent (b).

12. The process of claim 9 wherein said organic liquid (1) is a mixture of an oleophilic resin (a) and an organic solvent (b).

## Patentansprüche

1. Verfahren zur Herstellung von Druckfarben im wesentlichen bestehend aus den Schritten:
A. Bereitstellung einer Emulsion aus:
1. einer organischen Flüssigkeit ausgewählt aus der Gruppe:
a) oleophile Harze
b) organische Lösungsmittel und
c) Mischungen davon,

2. einem Emulgiermittel und

3. Wasser

B. Bildung einer wässrigen Pigmentsuspension,

C. Mischung besagter Emulsion mit besagter wäßriger Pigmentsuspension,

D. Aufkonzentrierung jenerEmulsions-und Pigmentsuspensionsmischung und

E. Herstellung einer Druckfarbe unmittelbar aus der konzentrierten Emulsions- und Pigmentmischung.

2. Verfahren des Anspruchs 1, worin jene organische Flüssigkeit (1) ein oleophiles Harz (a) ist.

3. Verfahren des Anspruchs 1, worin jene organische Flüssigkeit (1) ein organisches Lösungsmittel (b) ist.

4. Verfahren des Anspruchs 1, worin jene organische Flüssigkeit (1) eine Mischung aus (a) und (b) ist.

5. Verfahren des Anspruchs 1, 2, 3, oder 4, worin jener Aufkonzentrierungsschritt in einer Filterpresse erfolgt.

6. Verfahren des Anspruchs 5, worin jene Emulsion und wäßrige Pigmentsuspension bei 20° bis 80°C gemischt werden und jene Emulsion aus 50 bis 90 Prozent Wasser, 0 bis 40 Prozent jenes Harzes (a), 0 bis 40 Prozent jenes Lösungsmittels (b) und 0,05 bis 0,5 Prozent jenes Emulgiermittels besteht, wobei jene Emulsion mindestens 2,0 Prozent jenes Harzes (a) oder jenes Lösungsmittels (b) oder einer Mischung der beiden enthält.

7. Verfahren des Anspruchs 6, worin jene organische Flüssigkeit (1) ein oleophiles Harz (a) in einer Menge von 10 bis 30 Gewichtsprozent ist.

8. Verfahren des Anspruchs 6, worin jene organische Flüssigkeit (1) ein organisches Lösungsmittel (b) in einer Menge von 10 bis 30 Gewichtsprozent ist.

9. Verfahren des Anspruchs 6, worin jene Emulsions und Pigmentsuspensionsmischung vor dem Durchleiten durch jene Konzentrierungszone aus 70 bis 98, 5 Prozent Wasser, 0 bis 20 Prozent Harz, 0 bis 20 Prozent Lösungsmittel, 0,0015 bis 0,3 Prozent Emulgiermittel und 0,5 bis 10 Prozent Pigment besteht, wobei die Zusammensetzung mindestens 0,1 Gewichtsprozent jenes Harzes oder jenes Lösungsmittels oder einer Mischung der beiden enthält.

10. Verfahren des Anspruchs 9, worin jene organische Flüssigkeit (1) ein oleophiles Harz (a) ist.

11. Verfahren des Anspruchs 9, worin jene organische Flüssigkeit (1) ein organisches Lösungsmittel (b) ist.

12. Verfahren des Anspruchs 9, worin jene organische Flüssigkeit (1) eine Mischung aus einem oleophilen Harz (a) und einem organischen Lösungsmittel (b) ist.

## Revendications

1.- Procédé de production d'une encre, consistant essentiellement

A. à former une émulsion qui contient :

1. un liquide organique choisi dans le groupe comprenant

a) les résines oléophiles   ·

b) les solvants organiques et

c) leurs mélanges,

2. un agent émulsionnant et

3. de l'eau.

B. à former une suspension aqueuse d'un pigment,

C. à mélanger ladite émulsion avec ladite suspension aqueuse de pigment,

D. à concentrer ledit mélange d'émulsion et de suspension de pigment, et

E. à préparer une encre directement à partir du mélange d'émulsion et de pigment concentré.

2.- Procédé selon la revendication 1, dans lequel ledit liquide organique (1) est une résine oléophile (a).

3.- Procédé selon la revendication 2, dans lequel ledit liquide organique (1) est un solvant organique (b).

4.- Procédé selon la revendication 1, dans lequel ledit liquide organique (1) est un mélange de (a) et (b).

5.- Procédé selon la revendication 1, 2, 3 ou 4, dans lequel ladite étape de concentration est effectuée dans un filtre-presse.

6.- Procédé selon la revendication 5, dans lequel ladite émulsion et ladite suspension aqueuse de pigment sont mélangées à 20° – 80°C et ladite émulsion comprend 50 à 90% d'eau. 0 à 40% de ladite résine (a), 0 à 40% dudit solvant (b) et 0,05 à 0,5% dudit agent émulsionnant, ladite émulsion contenant un minimum de 2,0% de ladite résine (a) ou dudit solvant (b) ou du mélange des deux.

7.- Procédé selon la revendication 6, dans lequel ledit liquide organique (1) est une résine oléophile utilisée en une quantité de 10 à 30% en poids.

8.- Procédé selon la revendication 6, dans lequel ledit liquide organique (1) est un solvant organique (b) utilisé en une quantité de 10 à 30% en poids.

9.- Procédé selon la revendication 6, dans lequel ledit mélange d'émulsion et de suspension de pigment contient, avant passage dans ladite zone de concentration, 70 à 98,5% d'eau, 0 à 20% de résine, 0 à 20% de solvant, 0,0015 à 0,3% d'agent émulsionnant et 0,5 à 10% de pigment, la composition contenant au moins 0,1% en poids de ladite résine ou dudit solvant ou du mélange des deux.

10.- Procédé selon la revendication 9, dans lequel ledit liquide organique (1) est une résine oléophile (a).

11.- Procédé selon la revendication 9, dans lequel ledit liquide organique (1) est un solvant organique (b).

12.- Procédé selon la revendication 9, dans lequel ledit liquide organique (1) est un mélange d'une résine oléophile (a) et d'un solvant organique (b).